# EUROPEAN PATENT APPLICATION

(11) **EP 4 679 914 A1**
(43) Date of publication of application: **14.01.2026**
(21) Application number: 25188989.5
(22) Date of filing: 11.07.2025
(51) Int. Cl.: H04W 72/0446, G01S 13/00

(54) **APPARATUS FOR A DEVICE FOR A WIRELESS COMMUNICATION SYSTEM**

(30) Priority: 12.07.2024 IN 202411053531
(71) Applicant: Nokia Solutions and Networks Oy, 02610 Espoo (FI)
(72) Inventor: ADURU, Vinod, Bangalore (IN); KUMAR, M Deepak, Bangalore (IN)
(74) Representative: Nokia EPO representatives

(57) **Abstract**

An apparatus for a device for a wireless communication system, the apparatus comprising means for causing the device to: allocate resources for sensing based on a guard time between resources for downlink and uplink transmissions, perform sensing using the resources allocated for the sensing.

## Description

### Field of the Disclosure

Various example embodiments relate to an apparatus for a device for a wireless communication system.

Further example embodiments relate to a method for a device for a wireless communication system.

Further example embodiments relate to a network device for a wireless communication system.

Further example embodiments relate to a terminal device for a wireless communication system.

Further example embodiments relate to a wireless communication system.

### Background

Communication systems such as, e.g., wireless communication systems may be used for wireless exchange of information between two or more entities, e.g., comprising one or more terminal devices, e.g., user equipment (UE), and one or more network devices such as, e.g., base stations.

In some conventional approaches, sensing is considered as a feature of upcoming communication systems, e.g., in the context of joint communications and sensing (JCAS).

### Summary

Various example embodiments of the disclosure are set out by the independent claims. The example embodiments and features, if any, described in this specification, that do not fall under the scope of the independent claims, are to be interpreted as examples useful for understanding various example embodiments of the disclosure.

Some examples relate to an apparatus for a device for a wireless communication system, the apparatus comprising at least one processor, and at least one memory storing instructions that, when executed by the at least one processor, cause the device to: allocate resources for sensing based on a guard time between resources for downlink and uplink transmissions (e.g., transmissions to and/or from the device), perform sensing using the resources allocated for the sensing. In some examples, this enables to efficiently use resources associated with the guard time for performing the sensing.

In other words, in some examples, allocating the resources for the sensing based on the guard time comprises taking into consideration the guard time for allocating the resources for the sensing.

In some examples, allocating the resources for the sensing based on the guard time comprises allocating the resources for the sensing in, e.g., within, at least a portion of the guard time.

In some examples, the resources for the sensing comprise at least time resources, and, optionally, also frequency resources. Thus, in some examples, allocating the resources for the sensing in, e.g., within, the at least one portion of the guard time comprises selecting at least some time resources associated with, e.g., comprising the, guard time, for the sensing. Thus, in other words, in some examples, at least some of the time resources that are allocated for the sensing may at least partially overlap the guard time in the time dimension.

In some examples, the instructions, when executed by the at least one processor, cause the device to: allocate at least a, for example first, part of the resources for the sensing within the guard time. Thus, in some examples, the first part of the resources allocated for the sensing may use at least a portion of the guard time. However, in some examples, a second part of the resources allocated for the sensing may be associated with time resources outside of, e.g., not within, the guard time.

In some examples, the instructions, when executed by the at least one processor, cause the device to: use the complete guard time for the sensing.

In some examples, the instructions, when executed by the at least one processor, cause the device to: allocate at least a, for example second, part of the resources for the sensing adjacent to, e.g., outside of, e.g., subsequent to or preceding, the guard time.

In some examples, the sensing may - at least with respect to a time dimension - be limited to the guard time.

In some examples, the instructions, when executed by the at least one processor, cause the device to: allocate the resources for the sensing also based on a traffic. In other words, in some examples, allocating the resources for the sensing may be performed based on the guard time and based on the traffic.

In some examples, the instructions, when executed by the at least one processor, cause the device to: allocate a part of the resources for the sensing in resources configured for at least one of a) uplink data transmission, or b) downlink data transmission, or c) both uplink and downlink data transmission, e.g., along with the guard time.

In some examples, frequency resources may be at least partly used or may be fully used for the sensing.

In some examples, the sensing may comprise transmitting one or more sensing signals and receiving at least a portion of the transmitted sensing signals that may, e.g., interact (e.g., by scattering and/or reflection(s)) with an environment or with objects within this environment, respectively.

In some examples, radio signals, e.g., according to some accepted (and/or planned) specification, e.g., standard, may be used as sensing signals, e.g., reference signals and the like. Thus, in some examples, signals originally provided for wireless communication may be used as sensing signals, too. In some other examples, other radio signals, which, in some examples, may not be standardized, or which may not be used for communication, e.g., by a network device, may be used as sensing signals.

In some examples, the instructions, when executed by the at least one processor, cause the device to: use a radar technique for the sensing.

In some examples, the sensing may comprise transmitting sensing signals by a first entity, e.g., a network device, e.g., a radio unit of the network device, and receiving at least a part of the transmitted sensing signals by the first entity, e.g., the network device or its radio unit, respectively. In other words, in some examples, the sensing may comprise transmitting and receiving sensing signals at the same entity and/or location. In some examples, such an operation may also be denoted as mono-static sensing.

In some examples, the sensing may comprise transmitting the sensing signals by a first entity, e.g., the network device or its radio unit, respectively, and receiving at least a part of the transmitted sensing signals by a second entity, which is different from the first entity (e.g., another network device or a terminal device or a respective radio unit thereof, respectively), or vice versa. In other words, in some examples, the sensing may comprise transmitting and receiving sensing signals at different locations and/or entities. In some examples, such an operation may also be denoted as bi-static sensing.

In some examples, sensing may refer to the use of radio signals, e.g., sensing signals, to detect and/or estimate characteristics of one or more objects, e.g., target objects, in the environment. In some examples, e.g., by integrating sensing into a communications network or a network device or a terminal device thereof, the network or network device or terminal device may, e.g., act as a "radar" sensor, using the sensing signals, e.g., its own radio signals (or, in a bi-static case, radio signals transmitted by another entity), to sense, e.g., comprehend, the physical environment in which it operates. In some examples, performing sensing may allow the device for the communication system to collect data on at least one of: a) a range, or b) a velocity, or c) a position, or d) an orientation, or e) a size, or f) a shape, or g) an image, or h) a material of objects and devices.

In some examples, the instructions, when executed by the at least one processor, cause the device to: use one, e.g., same, radio unit for transmitting and receiving sensing signals. In some examples, at least one antenna capable of simultaneous transmission and reception may be use by the radio unit.

In some examples, the instructions, when executed by the at least one processor, cause the device to: use a first radio unit for transmitting the sensing signals, use a second radio unit for receiving the sensing signals.

In some examples, the first radio unit may comprise an antenna capable of transmission and reception one at a time, e.g., in a time-multiplex manner.

In some examples, the second radio unit may also comprise an antenna capable of transmission and reception one at a time, e.g., in a time-multiplex manner, or the second radio unit may comprise an antenna that is capable of reception (but, e.g., not transmission).

In some examples, the first radio unit may comprise an antenna capable of, e.g., only, transmission, and the second radio unit may comprise an antenna capable of, e.g., only, reception.

Some examples relate to an apparatus for a device for a wireless communication system, the apparatus comprising means for causing the device to: allocate resources for sensing based on a guard time between resources for downlink and uplink transmissions, perform sensing using the resources allocated for the sensing.

In some examples, the means for allocating the resources and for performing the sensing may, e.g., comprise at least one processor, and at least one memory storing instructions that, when executed by the at least one processor, cause the device to perform the aspects of allocating the resources and performing the sensing.

In some examples, the means for allocating the resources and for performing the sensing may, e.g., comprise circuitry configured to perform at least one of the aforementioned aspects of allocating the resources and performing the sensing.

Some examples relate to a method for a device for a wireless communication system, comprising: allocating resources for sensing based on a guard time between resources for downlink and uplink transmissions, performing sensing using the resources allocated for the sensing.

Some examples relate to a network device for a or the wireless communication system, comprising at least one apparatus according to the disclosure. Thus, in some examples, the network device may perform aspects according to the disclosure.

Some examples relate to a terminal device for a or the wireless communication system, comprising at least one apparatus according to the disclosure. Thus, in some examples, the terminal device may perform aspects according to the disclosure.

In some examples, at least one of the network device or the terminal device may adhere to and/or may be based on some accepted (and/or planned) specification, e.g., standard, such as, e.g., 3G, 4G, 5G, 6G, or some other wireless communication standard.

Some examples relate to a wireless communication system comprising at least one of: a) an apparatus according to the disclosure, or b) a network device according to the disclosure, or c) a terminal device according to the disclosure.

Some examples relate to a computer program comprising instructions which, when executed by an apparatus, cause the apparatus to perform at least one aspect of the method according to the disclosure.

Some examples relate to a computer-readable storage medium, for example a non-transitory computer-readable storage medium, comprising the computer program according to the disclosure.

Some examples relate to a data carrier signal carrying and/or characterizing the computer program according to the disclosure.

### Brief Description of the Figures

- Fig. 1A: depicts a simplified block diagram according to some examples,
- Fig. 1B: depicts a simplified block diagram according to some examples,
- Fig. 2: depicts a simplified block diagram according to some examples,
- Fig. 3: depicts a simplified flow chart according to some examples,
- Fig. 4: depicts a simplified flow chart according to some examples,
- Fig. 5: depicts a simplified flow chart according to some examples,
- Fig. 6: depicts a simplified flow chart according to some examples,
- Fig. 7: depicts a simplified flow chart according to some examples,
- Fig. 8: depicts a simplified flow chart according to some examples,
- Fig. 9: depicts a simplified block diagram according to some examples,
- Fig. 10: depicts a simplified block diagram according to some examples,
- Fig. 11: depicts a simplified block diagram with different scenarios according to some examples,
- Fig. 12: depicts a simplified diagram of resources according to some examples,
- Fig. 13: depicts a simplified diagram of resources according to some examples.

### Description of some Example Embodiments

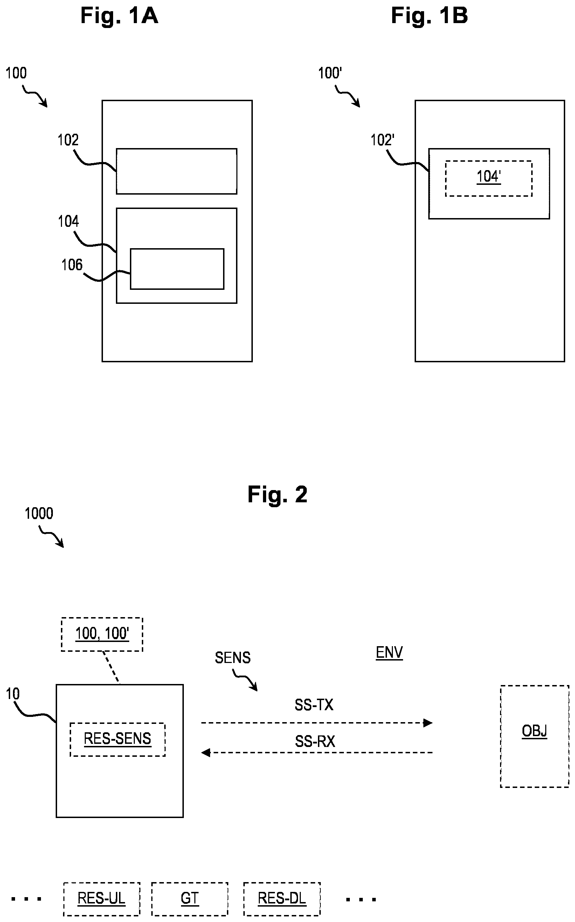

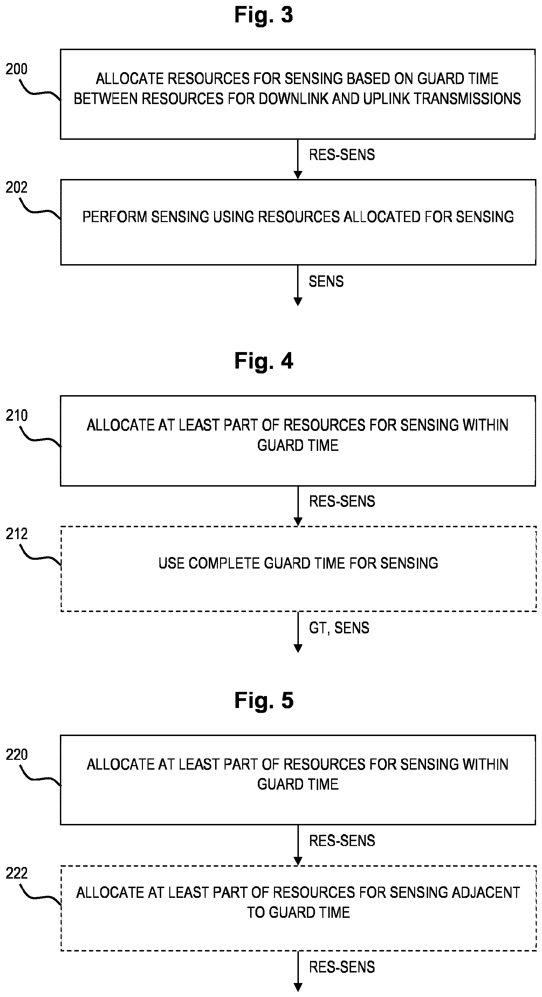

Some examples, see Fig. 1A, 2, 3, relate to an apparatus 100 for a device 10 for a wireless communication system 1000, the apparatus 100 comprising at least one processor 102, and at least one memory 104 storing instructions 106 that, when executed by the at least one processor 102, cause the device 10 to: allocate 200 (Fig. 3) resources RES-SENS for sensing SENS based on a guard time GF (Fig. 2) between resources RES-UL for uplink and resources RES-DL for downlink transmissions (e.g., transmissions to and/or from the device 10), perform 202 (Fig. 3) sensing SENS using the resources RES-SENS allocated for the sensing SENS. In some examples, this enables to efficiently use resources associated with the guard time GT for performing the sensing SENS.

In other words, in some examples, Fig. 3, allocating 200 the resources RES-SENS for the sensing SENS based on the guard time GT comprises taking into consideration the guard time GT for allocating the resources for the sensing.

In some examples, Fig. 3, allocating 200 the resources RES-SENS for the sensing SENS based on the guard time GT comprises allocating the resources RES-SENS for the sensing in, e.g., within, at least a portion of the guard time GT. This way, in some examples, at least a portion of the guard time, which, for example, may not be used for communication (e.g., in the uplink and/or downlink direction), may at least temporarily be used for the sensing SENS.

In some examples, Fig. 2, the resources RES-SENS for the sensing SENS comprise at least time resources, and, optionally, also frequency resources. Thus, in some examples, allocating the resources for the sensing SENS in, e.g., within, the at least one portion of the guard time GT comprises selecting at least some time resources associated with, e.g., comprising the, guard time GT, for the sensing SENS. Thus, in other words, in some examples, at least some time resources that are allocated for the sensing SENS may at least partially overlap the guard time GT in the time dimension.

In some examples, Fig. 4, the instructions 106, when executed by the at least one processor 102, cause the device 10 to: allocate 210 at least a, for example first, part of the resources RES-SENS for the sensing within the guard time GT. Thus, in some examples, the first part of the resources allocated for the sensing may use at least a portion of the guard time GT (or, in some examples, the complete guard time GT). However, in some examples, a second part of the resources allocated for the sensing may be associated with time resources outside of, e.g., not within, the guard time GT.

In some examples, Fig. 4, the instructions 106, when executed by the at least one processor 102, cause the device 10 to: use 212 the complete guard time GT, for example at least the complete guard time GT, for the sensing SENS.

In some examples, Fig. 5, the instructions 106, when executed by the at least one processor 102, cause the device to, optionally, allocate 220 at least a, for example first, part of the resources RES-SENS for the sensing within the guard time GT, and, optionally, allocate 222 at least a, for example second, part of the resources RES-SENS for the sensing SENS adjacent to, e.g., outside of, e.g., subsequent to or preceding, the guard time GT.

In some other examples, however, the sensing SENS may - at least with respect to a time dimension - be limited to the guard time GT.

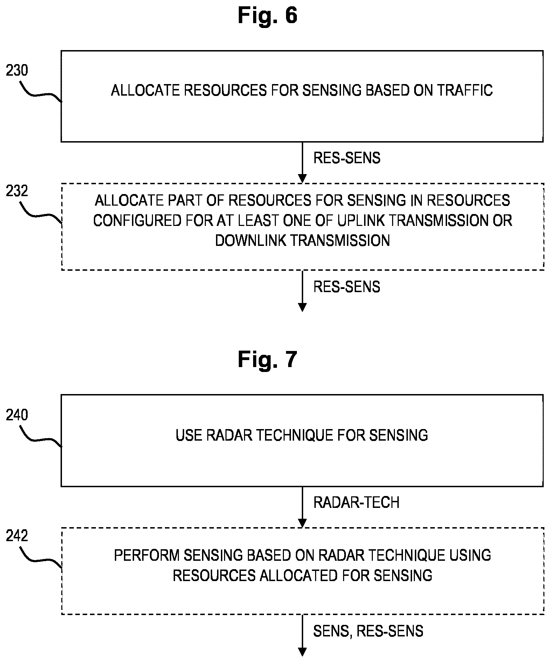

In some examples, Fig. 6, the instructions 106, when executed by the at least one processor 102, cause the device 10 to: allocate 230 the resources RES-SENS for the sensing SENS also based on a traffic. In other words, in some examples, allocating the resources RES-SENS for the sensing SENS may be performed based on the guard time GT and based on the traffic.

In some examples, Fig. 6, the instructions 106, when executed by the at least one processor 102, cause the device 10 to: allocate 232 a part of the resources for the sensing SENS in resources configured for at least one of a) uplink data transmission, or b) downlink data transmission. In other words, in some examples, at least some resources that are originally configured for uplink or downlink data transmissions may be used for performing the sensing SENS instead. In some examples, this can be beneficial, e.g., if it turns out that there is less uplink or downlink traffic than originally expected (and, for example, correspondingly configured resources, accordingly). In these cases, in some examples, at least some of the resources originally configured for at least one of a) the uplink data transmission, or b) the downlink data transmission may be used for the sensing, e.g., in addition to at least a part of the guard time GT. In some examples, this way, additional resources (e.g., in addition to the guard time GT) may dynamically be used for the sensing.

In some examples, Fig. 2, the sensing SENS may comprise transmitting one or more sensing signals SS-TX and receiving at least a portion of the transmitted sensing signals SS-RX that may, e.g., interact (e.g., by scattering and/or reflection(s)) with an environment ENV or with objects OBJ within this environment ENV, respectively.

In some examples, Fig. 2, radio signals, e.g., according to some accepted (and/or planned) specification, e.g., standard, may be used as sensing signals, e.g., reference signals and the like. Thus, in some examples, signals originally provided for wireless communication may be used as sensing signals, too. In some other examples, other radio signals, which, in some examples, may not be standardized, or which may not be used for communication, e.g., by a network device, may be used as sensing signals.

In some examples, Fig. 7, the instructions 106, when executed by the at least one processor 102, cause the device 10 to: use 240 a radar technique RADAR-TECH for the sensing SENS. The optional block 242 of Fig. 7 symbolizes performing the sensing SENS based on the radar technique RADAR-TECH using the resources RES-SENS allocated for sensing.

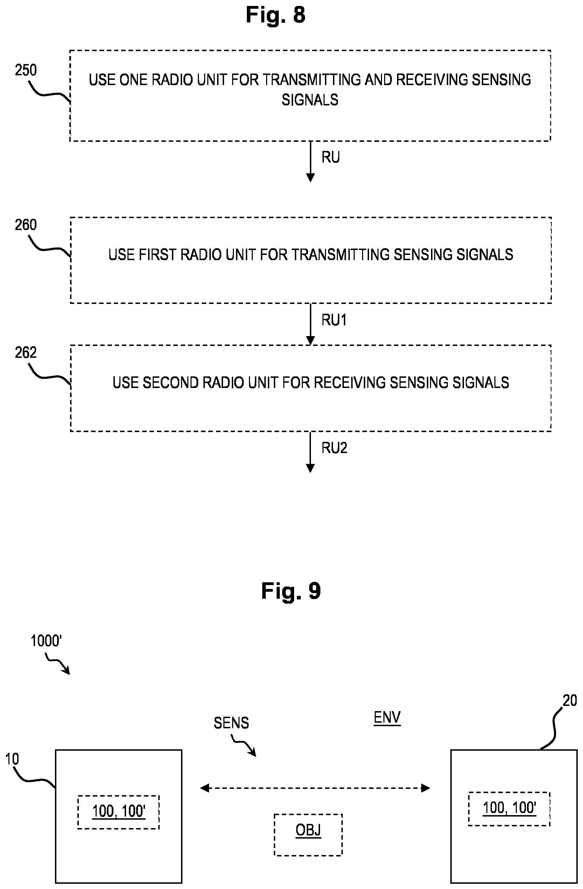

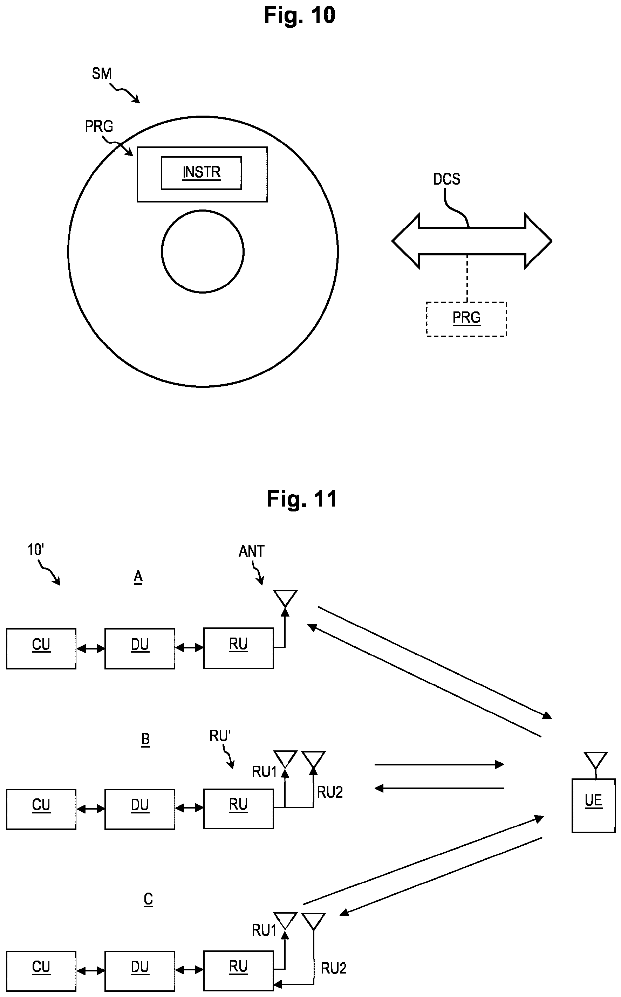

In some examples, Fig. 8, the instructions 106, when executed by the at least one processor 102, cause the device 10 to: use 250 one, e.g., same, radio unit RU for transmitting and receiving sensing signals SS-TX, SS-RX (Fig. 2). In some examples, at least one antenna capable of simultaneous transmission and reception may be use by the radio unit RU. An example configuration for performing aspects of block 250 of Fig. 8 are explained in detail further below with respect to scenario A of Fig. 11.

In some examples, Fig. 8, the instructions 106, when executed by the at least one processor 102, cause the device 10 to: use 260 a first radio unit RU1 for transmitting the sensing signals SS-TX, use 262 a second radio unit RU2 for receiving the sensing signals SS-RX.

In some examples, the first radio unit RU1 may comprise an antenna capable of transmission and reception one at a time, e.g., in a time-multiplex manner.

In some examples, the second radio unit RU2 may also comprise an antenna capable of transmission and reception one at a time, e.g., in a time-multiplex manner, or the second radio unit may comprise an antenna that is capable of reception (but, e.g., not transmission).

In some examples, the first radio unit may comprise an antenna capable of, e.g., only, transmission, and the second radio unit may comprise an antenna capable of, e.g., only, reception.

Further example configurations for performing at least some aspects of the blocks 260, 262 of Fig. 8 are explained in detail further below with respect to scenarios B, C of Fig. 11.

Some examples, Fig. 1B, relate to an apparatus 100' for a device 10 for a wireless communication system 1000, the apparatus 100' comprising means 102' for causing the device 10 to: allocate 200 (Fig. 3) resources for sensing based on a guard time between resources for downlink and uplink transmissions, perform 202 sensing using the resources allocated for the sensing.

In some examples, Fig. 1B, the means 102' for allocating the resources and for performing the sensing may, e.g., comprise at least one processor 102, and at least one memory 104 storing instructions 106 that, when executed by the at least one processor 102, cause the device 10 to perform the aspects of allocating 200 the resources and performing 202 the sensing.

In some examples, Fig. 1B, the means 102' for allocating the resources and for performing the sensing may, e.g., comprise circuitry 104' configured to perform at least one of the aforementioned aspects of allocating 200 the resources and performing 202 the sensing.

Some examples, Fig. 3, relate to a method for a device 10, 20 for a wireless communication system 1000, 1000', comprising: allocating 200 resources for sensing based on a guard time between resources for downlink and uplink transmissions, performing 202 sensing using the resources allocated for the sensing.

Some examples, Fig. 9, relate to a network device 10 for a or the wireless communication system 1000, 1000', comprising at least one apparatus 100, 100' according to the disclosure. Thus, in some examples, the network device 10 may perform aspects according to the disclosure.

Some examples, Fig. 9, relate to a terminal device 20 for a or the wireless communication system 1000, 1000', comprising at least one apparatus 100, 100' according to the disclosure. Thus, in some examples, the terminal device 20 may perform aspects according to the disclosure.

In some examples, at least one of the network device 10 or the terminal device 20 may adhere to and/or may be based on some accepted (and/or planned) specification, e.g., standard, such as, e.g., 3G, 4G, 5G, 6G, or some other wireless communication standard.

Some examples, Fig. 2, 9, relate to a wireless communication system 1000, 1000' comprising at least one of: a) an apparatus 100, 100' according to the disclosure, or b) a network device 10 according to the disclosure, or c) a terminal device 20 according to the disclosure.

Some examples, Fig. 10, relate to a computer program PRG comprising instructions INSTR which, when executed by an apparatus, e.g., apparatus 100, cause the apparatus to perform at least one aspect of the method according to the disclosure.

Some examples, Fig. 10, relate to a computer-readable storage medium SM, for example a non-transitory computer-readable storage medium, comprising the computer program PRG according to the disclosure.

Some examples, Fig. 10, relate to a data carrier signal DCS carrying and/or characterizing the computer program PRG according to the disclosure.

In the following, further aspects and examples are disclosed, which, in some examples, may be combined with at least one of the aspects and/or examples disclosed above.

In some examples, wherein, for example, a network device, e.g., gNB, performs aspects of the disclosure, radio resources may be commonly shared for a plurality of services, e.g., all the services, e.g., including sensing sens. In some examples, the principle according to the disclosure may enable to provide different ways to accommodate data traffic (e.g., legacy data traffic) and the resources, e.g., bandwidth, required for the sensing SENS. Note that the principle according to the disclosure provides an efficient solution for resource allocation, e.g., in case of a network device, e.g., base station, e.g., base transceiver station (BTS), or gNB, e.g., as a sensing radar, and can be applicable to any case of network device used for sensing. Also note that the principle according to the disclosure is not limited to applications in the sphere of a network device. Rather, in some examples, the principle according to the disclosure may, e.g., also, be applied to one or more terminal devices, e.g., for performing sensing.

In some examples, the principle of the disclosure can be applied to wireless communication systems using time division duplexing (TDD) and, for example, an orthogonal frequency division multiplexing (OFDM),- based frame structure, as may be used, for example, for 5G Adv. and 6G communication systems, as well.

In some examples, the principle of the disclosure can be implemented in a scheduler, e.g., of a device 10 for the wireless communication system 1000, 1000'.

Fig. 11 schematically depicts an example deployment of a network device 10', e.g., gNB, for a 5G and 5G Adv. communications system in three scenarios A, B, C according to different example embodiments. Element UE of Fig. 11 symbolizes a terminal device, e.g., user equipment.

The network device comprises a central unit CU, a distributed unit DU, and a radio unit RI. In some examples, e.g., depending on a classical implementation or a cloud-based implementation, different functionalities of layer 2 (L2) may be shared between Real Time ("RT") and Non-Real Time ("NRT") on the distributed unit DU. In some examples, e.g., in case of FR1 (e.g., frequency range 1), a beam forming functionality may remain on the distributed unit DU. In some examples, e.g., in case of FR2 (e.g., frequency range 2), beam forming may be performed on the radio unit RU. In some examples, layer 3 (L3) processing may be deployed on the central unit CU. In some examples, the antennas, which are collectively denoted with reference sign ANT in Fig. 11, may be multiple input multiple output (MIMO) or Massive MIMO, e.g., for implementations based on 5G or 5G Adv. In some examples, 6G communication systems may also follow a similar deployment and may, e.g., use advanced hardware, e.g., to support additional functionalities. In some examples, the principle of the disclosure can be implemented on any of the above-mentioned example deployment cases.

In some examples, e.g., if the radio unit RU is capable of simultaneous transmission and reception capabilities, then only this one radio RU may be sufficient to deploy aspects of the disclosure, see, for example, scenario A of Fig. 11. In some examples, e.g., in case of Massive mMIMO antennas, the antennas may be divided such that at least some antennas are used for transmission and at least some other antennas are used for reception, e.g., simultaneous to the transmission. In some examples, the division may be done either horizontally or vertically or in any other pattern.

In some examples, e.g., if the radio unit RU is capable of only transmission or reception one at time, see scenario B of Fig. 11, two RU entities may be provided, which are collectively denoted with reference sign RU'.

In some examples, see Fig. 11, scenario C, the principle according to the disclosure can also be implemented on two RU entities RU1, RU2, e.g., one with only transmission capability (RU1) and the other (RU2) with only reception capability.

In some examples, the principle according to the disclosure can be used with a TDD frame structure, as, e.g., provided by 4G.

In some examples, the principle according to the disclosure can be used with a frame structure as provided by 5G and 5G adv., which continued the TDD frame structure of the 4G systems in a similar fashion and which provide increased flexibility, e.g., to adapt with traffic requirements.

As an example, 5G introduces a concept called "flexible slot", which can be dynamically changed with the current traffic flow of a base station, e.g., BTS or gNB.

In some examples, in the 5G/5G Adv. systems, the flexible slots may be controlled using a radio resource control, RRC, message "IE TDD-UL-DL-ConfigCommon", which is a part of a system information block (SIB) at a cell level. In some examples, an information element (IE) "TDD-UL-DL-ConfigDedicated", which is part of "servingConfig", may be used at a user level, e.g., to override the TDD-UL-DL-ConfigCommon.

In some examples, radio resources in the form of flexible slots can be configured as either uplink (UL) or downlink (DL) or a combination of both (e.g., DL followed by UL). In some examples, a flexible slot having both resources for DL, e.g., followed by resources for UL, may comprise a guard period, e.g., guard time GT, e.g., between symbols associated with downlink and symbols associated with uplink, also see, for example, elements RES-UL, GT, RES-DL of Fig. 2. This guard time GT may be provided or used, e.g., in case of switching from DL to UL, e.g., within one, e.g., flexible, slot. In some conventional approaches, the guard period is defined to cover a propagation delay and a time taken by the radio frequency, RF, components, e.g., to switch between DL to UL, e.g., at a terminal device, e.g., user equipment, UE, side.

In some conventional approaches, e.g., from a 3GPP point, the guard time may be configured as 13µs, e.g., in case of FR1, and as 7 µs, e.g., in case of FR2. However, in some conventional approaches, the guard period may be longer than a duration of three OFDM symbols.

In some examples, Fig. 2, the principle of the disclosure proposes to use at least the guard period or guard time GT for the sensing SENS, e.g., along with DL or UL or DL and UL slots (e.g., slots for downlink and/or uplink transmissions).

In some examples, during the guard time, no DL transmissions and no UL transmissions are performed. In view of this, in some examples, the guard time GT may be used for the sensing SENS (e.g., BTS or gNB as radar sensing).

In some examples, the usage of the guard time GT for the sensing SENS, e.g., along with symbols for UL and DL transmissions, e.g., within a same, e.g., flexible, slot, may have comparatively low impact on the communication system's, e.g., legacy, functionalities, such as the UL and/or DL data transmissions, which may, e.g., be performed outside of the guard time GT. In some examples, the usage of the guard time GT, e.g., for both radar signal transmissions and reception for the sensing SENS, is also possible. In other words, in some examples, sensing signals, e.g., according to a radar technique, may be transmitted and received within the guard time GT.

In some examples, the usage of the guard time GT alone for sensing, e.g., sensing only (e.g., complete guard time GT being used for the sensing) or along with UL and DL symbols may be defined by properties and/or features of the sensing technique applied, such as a radar technique. In some examples, these properties and/or features of the sensing technique may comprise at least one of: a) radar pulse length, or b) number of pulses, e.g., in a radar burst. In some examples, a burst of radar pulses as, e.g., used for sensing, may end with the total time of guard time, optionally plus UL and/or DL symbols configured. In other words, in some examples, depending on the sensing requirements, the sensing data transmission and reception duration can be longer than the guard period or guard time. In this case, in some examples, the sensing functionality resources may be extended, e.g., to DL symbols before the guard period or extended, e.g., to UL symbols after the guard period.

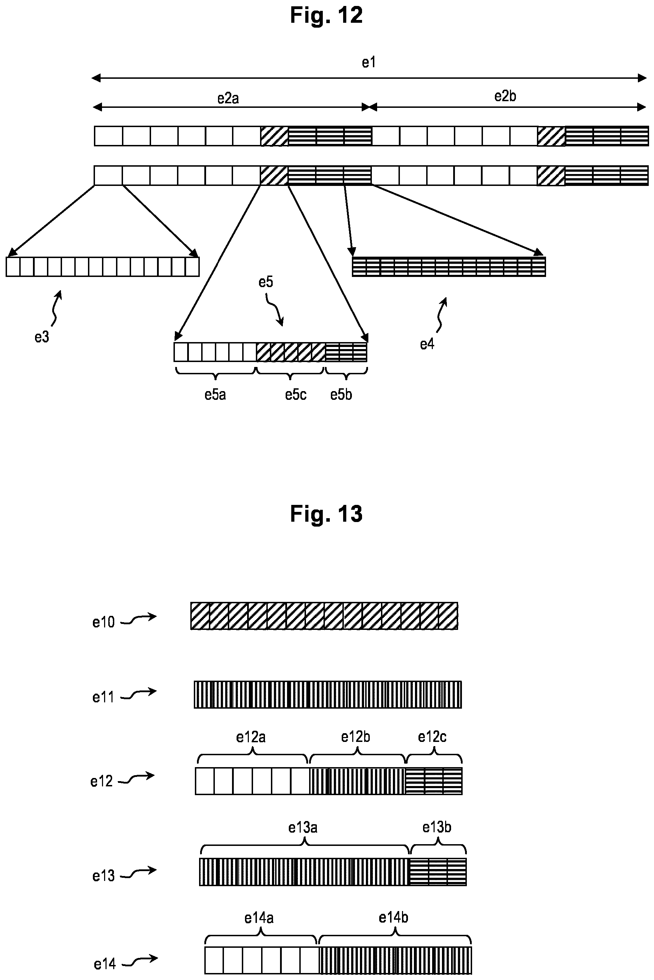

In the following diagrams of Fig. 12, 13, different possible configurations according to some examples are given, which illustrate how to configure resource for sensing, e.g., radar pulses, in the guard time GT, e.g., along with UL and/or DL symbols, e.g., within a slot of time. In some examples, e.g., depending on the radar configuration, the UL and/or DL symbols may extend to the prior or next symbols or slots as well.

Fig. 12 schematically depicts radio resources according to some examples, wherein element e1 symbolizes two frames, e.g., corresponding to a time interval of 20 milliseconds (ms). Element e2a symbolizes a first frame of the two frames e1, and element e2b symbolizes a second frame of the two frames w1, each of the frames e2a, e2b comprising a duration of 10 ms. Each of the frames e2a, 2b comprises a plurality of, presently, e.g., 10 slots.

Element e3 symbolizes details of a first slot of the first frame e2a. In some examples, the first slot may, e.g., comprise a plurality of, e.g., presently, 14 symbols, e.g., OFDM symbols, e.g., in case of a sub-carrier spacing of, e.g., 15 kHz. Note that in some examples, the number of OFDM symbols may vary with respect to the sub-carrier spacing. In some examples, all 14 OFDM symbols of the first slot e3 may be associated with downlink transmissions, e.g., configured as DL symbols.

The further slots of the frames e2a, e2b may, e.g., comprise a similar structure, e.g., each slot comprising a plurality of, e.g., 14, OFDM symbols.

As an example, element e4 symbolizes details of a last (presently, e.g., tenth) slot of the first frame e2a. In some examples, all 14 OFDM symbols of the last slot e4 may be associated with uplink transmissions, e.g., configured as UL symbols.

In some examples, Fig. 12, similar to the first slot e3, the slots 2, 3, 4, 5, 6 of the first frame e2a may also be used for downlink transmissions, the slots 2, 3, 4, 5, 6, e.g., being configured to provide 14 OFDM symbols for downlink transmission(s) each.

In some examples, Fig. 12, similar to the last slot e4, the slots 8, 9 of the first frame e2a may also be used for uplink transmissions, the slots 8, 9, e.g., being configured to provide 14 OFDM symbols for uplink transmission(s) each.

In some examples, the seventh slot e5 of the first frame e2a may be considered as a "switching slot", e.g., a flexible slot, because the preceding slots 1 to 6 of the first frame e2a are used for downlink transmissions, whereas the subsequent slots 8, 9, 10 are used for uplink transmissions.

In some examples, as depicted by Fig. 12, the switching slot e5 may also comprise a plurality of, presently, e.g., 14 OFDM symbols, wherein at least some of these OFDM symbols of the switching slot e5 may, in some examples, e.g., dynamically, be configured for at least one of: a) downlink transmissions, see, for example, the (presently for example six) symbols e5a, or b) uplink transmissions, see, for example, the (presently for example three) symbols e5b, or c) the guard time, see, for example, the (presently for example five) symbols e5c. In some examples, at least some of the symbols e5c associated with the guard time e5c may be used for the sensing SENS (Fig. 2).

In the following, several example configurations, e.g., for the slot e5 of Fig. 12, e.g., a switching slot, associated with some example embodiments of the disclosure are explained with reference to Fig. 13.

Element e10 of Fig. 13 symbolizes an example configuration of a slot, e.g., the switching slot e5 of Fig. 12, according to some example embodiments, wherein all OFDM symbols are configured for the guard period or guard time GT. In other words, no data transmissions (neither uplink nor downlink) are provide, and no sensing is provided. In some examples, the switching slot e5 (Fig. 12) may at least temporarily comprise the configuration of element e10 of Fig. 13. In other words, in some examples, at least one switching slot of the frames e1 (Fig. 12) may at least temporarily comprise the configuration of element e10 of Fig. 13. Note, however, that in some examples, at least one other, e.g., further, switching slot (e.g., other than element e5), may be provided, which comprises another configuration than the example configuration of element e10. As an example, the at least one other switching slot may comprise a configuration according to or at least based on at least one of the further examples e11, e12, e13, e14 of Fig. 13, which are explained in detail below.

Element e11 of Fig. 13 symbolizes an example configuration of a slot, e.g., the switching slot e5 of Fig. 12, according to some example embodiments, wherein all OFDM symbols are configured for the sensing SENS (Fig. 2), e.g., representing the sensing resources RES-SENS according to some examples. In other words, while some conventional approaches may use the complete slot e5 for a guard period (e.g., with no transmissions at all, also with not sensing being performed therein), in some examples, according to the configuration of element e11 of Fig. 13, all OFDM symbols used for the guard period in some conventional approaches may be allocated for the sensing SENS according to some embodiments. In other words, with the example slot configuration of element e11 of Fig. 13, no data transmissions (neither uplink nor downlink) are provided, but all 14 OFDM symbols of the slot e11 may be used for the sensing SENS. In some examples, the switching slot e5 of Fig. 12 may at least temporarily comprise the configuration of element e11 of Fig. 13. In other words, in some examples, at least one switching slot of the frames e1 (Fig. 12) may at least temporarily comprise the configuration of element e11 of Fig. 13. Note, however, that in some examples, at least one other, e.g., further, switching slot (e.g., other than element e5), may be provided, which comprises another configuration than the example configuration of element e11. As an example, the at least one other switching slot may comprise a configuration according to or at least based on at least one of the further examples e10, e12, e13, e14 of Fig. 13.

Element e12 of Fig. 13 symbolizes an example configuration of a slot, e.g., the switching slot e5 of Fig. 12, according to some example embodiments, wherein some OFDM symbols e12a are configured as downlink symbols, some other OFDM symbols e12b are configured for the sensing SENS (Fig. 2), e.g., representing the sensing resources RES-SENS according to some examples, and some other OFDM symbols e12c are configured as uplink symbols. In other words, while some conventional approaches may use the OFDM symbols e12b of slot e12 to provide a guard period, in some examples, these OFDM symbols e12b arranged between the DL symbols e12a and the UL symbols e12c are used for the sensing SENS. As an example, according to the configuration e12 of Fig. 13, sensing signals such as radar signals for the sensing SENS may be transmitted and/or received within the symbols e12b, e.g., only within the symbols e12b. In some examples, the switching slot e5 of Fig. 12 may at least temporarily comprise the configuration of element e12 of Fig. 13. In other words, in some examples, at least one switching slot of the frames e1 (Fig. 12) may at least temporarily comprise the configuration of element e12 of Fig. 13. Note, however, that in some examples, at least one other, e.g., further, switching slot (e.g., other than element e5), may be provided, which comprises another configuration than the example configuration of element e12. As an example, the at least one other switching slot may comprise a configuration according to or at least based on at least one of the further examples e10, e11, e13, e14 of Fig. 13.

Element e13 of Fig. 13 symbolizes an example configuration of a slot, e.g., the switching slot e5 of Fig. 12, according to some example embodiments, wherein some OFDM symbols e13a may be used for the sensing SENS, and wherein some other OFDM symbols e13b may be used as, e.g., UL symbols. Note that, in some examples, at least some of the OFDM symbols e13a may have been configured as DL symbols, e.g., similar to the symbols e12a of element e12, but that, in some examples, it may be decided that these symbols originally configured as DL symbols may also, at least temporarily, be used for the sensing SENS, e.g., depending on a traffic. As an example, if it is determined that there is comparatively few DL traffic, in some examples, see Fig. 13, element e13, at least some of the OFDM symbols e12a originally configured as DL symbols may be used for the sensing SENS, e.g., additionally to OFDM symbols used for the guard time, see element e12b. However, if there is comparatively much DL traffic, at least some of the OFDM symbols e12a originally configured as DL symbols may also be used for the DL traffic, see element e12. In some examples, the switching slot e5 of Fig. 12 may at least temporarily comprise the configuration of element e13 of Fig. 13. In other words, in some examples, at least one switching slot of the frames e1 (Fig. 12) may at least temporarily comprise the configuration of element e13 of Fig. 13. Note, however, that in some examples, at least one other, e.g., further, switching slot (e.g., other than element e5), may be provided, which comprises another configuration than the example configuration of element e13. As an example, the at least one other switching slot may comprise a configuration according to or at least based on at least one of the further examples e10, e11, e12, e14 of Fig. 13.

Element e14 of Fig. 13 symbolizes an example configuration of a slot, e.g., the switching slot e5 of Fig. 12, according to some example embodiments, wherein some OFDM symbols e14a may be used as, e.g., DL symbols, and wherein some other OFDM symbols e14b may be used for the sensing SENS. Note that, in some examples, at least some of the OFDM symbols e14b may have been configured as UL symbols, e.g., similar to the symbols e12c of element e12, but that, in some examples, it may be decided that these symbols originally configured as UL symbols may also, at least temporarily, be used for the sensing SENS, e.g., depending on a traffic. As an example, if it is determined that there is comparatively few UL traffic, in some examples, see Fig. 13, elements e12, e14, at least some of the OFDM symbols e12c originally configured as UL symbols may be used for the sensing SENS, e.g., additionally to OFDM symbols used for the guard time, see element e12b, so that comparatively many OFDM symbols e14b may, at least temporarily (e.g., during few UL traffic) be used for the sensing SENS. However, if there is comparatively much UL traffic, at least some of the OFDM symbols e12c originally configured as UL symbols may also be used for the UL traffic, see element e12. In some examples, the switching slot e5 of Fig. 12 may at least temporarily comprise the configuration of element e14 of Fig. 13. In other words, in some examples, at least one switching slot of the frames e1 (Fig. 12) may at least temporarily comprise the configuration of element e14 of Fig. 13. Note, however, that in some examples, at least one other, e.g., further, switching slot (e.g., other than element e5), may be provided, which comprises another configuration than the example configuration of element e14. As an example, the at least one other switching slot may comprise a configuration according to or at least based on at least one of the further examples e10, e11, e12, e13 of Fig. 13.

In other words, in some examples, see Fig. 13, element e12, at least some resources, e.g., OFDM symbols e12b (or at least time resources associated with the OFDM symbols e12b) associated with a guard time GT may be used for the sensing SENS. However, in some examples, see element e13, at least some OFDM symbols, e.g., originally, configured for DL transmissions, may at least temporarily also be used for the sensing, see the OFDM symbols e13a of element e13. Similarly, alternatively or additionally, in some examples, see element e14, at least some OFDM symbols, e.g., originally, configured for UL transmissions, may at least temporarily also be used for the sensing, see the OFDM symbols e14b of element e14.

In other words, in some examples, the resources used for the sensing SENS may at least temporarily be extended over the guard time GT or the resources e12b (Fig. 13) used for the guard time, respectively.

In some examples, this extension of resources for the sensing SENS may be applied within the same slot e5, e12, e13, e14. In some other examples, however, this extension of resources for the sensing SENS may also be applied outside of the same slot e5, e12, e13, e14, e.g., using at least one symbol, e.g., OFDM symbol, of an adjacent (e.g., preceding or subsequent) slot. As an example, considering the configuration e13 of Fig. 13, in some examples, the resources for the sensing SENS may also be extended from the seventh slot e5 of frame e2a of Fig. 12 to, e.g., the sixth slot of the frame e2a, e.g., also at least temporarily using at least the last OFDM symbol of the sixth slot of the frame e2a for the sensing SENS. As mentioned above, in some examples, this extension of resources for sensing may also be applied to at least one subsequent, e.g., eight slot, and/or to both at least one preceding (e.g., sixth) and one subsequent (e.g., eight) slot.

In some examples, Fig. 2, an allocation of resources, e.g., symbols, e.g., of UL symbols and/or DL symbols, e.g. to the resources RES-SENS for the sensing SENS, can be done in two approaches A1, A2, as detailed below. In some examples, both procedures A1, A2 may be transparent to terminal devices such as UEs.

approach A1: Not to schedule any UL or DL on the symbols that are to be allocated for the sensing. In some examples, this approach may make a terminal device to blind decode the PDCCH (Physical Downlink Control Channel). In some examples, with this approach A1, power saving on the terminal device may not be possible. In some examples, e.g., if some resources that have already been configured for UL or DL are not used (e.g., due to few traffic), at least some of these already configured resources for UL and/or DL may be used for the sensing SENS.

approach A2: By configuring additional UL and/or DL symbols, e.g., as guard time/period, which, in some examples, may, e.g., be done with an RRC message, as mentioned above. In some examples, this approach may make a terminal device not to decode anything, and power saving on the terminal device may be possible.

As already mentioned above, the principle according to the disclosure is not limited to network devices such as, e.g., base transceiver stations, e.g., BTS, e.g. gNB, but may, for example, also be applied to other devices capable of transmitting and/or receiving, such as, e.g., terminal devices, e.g., user equipment.

## Claims

1. An apparatus (100') for a device (10, 20) for a wireless communication system (1000; 1000'), the apparatus (100) comprising means (102') for causing the device (10, 20) to: allocate (200) resources (RES-SENS) for sensing (SENS) based on a guard time (GT) between resources (RES-UL, RES-DL) for uplink and downlink transmissions, perform (202) sensing (SENS) using the resources (RES-SENS) allocated for the sensing (SENS).

2. The apparatus (100) according to claim 1, wherein the apparatus (100) further comprising means (102') for causing the device (10, 20) to: allocate (210; 220) at least a, for example first, part of the resources (RES-SENS) for the sensing (SENS) within the guard time (GT).

3. The apparatus (100) according to any of the preceding claims, wherein the apparatus (100) further comprising means (102') for causing the device (10, 20) to: use (212) the complete guard time (GT) for the sensing (SENS).

4. The apparatus (100) according to any of the preceding claims, wherein the apparatus (100) further comprising means (102') for causing the device (10, 20) to: allocate (222) at least a, for example second, part of the resources (RES-SENS) for the sensing (SENS) adjacent to the guard time (GT).

5. The apparatus (100) according to any of the preceding claims, wherein the apparatus (100) further comprising means (102') for causing the device (10, 20) to: allocate (230) the resources (RES-SENS) for the sensing (SENS) also based on a traffic.

6. The apparatus (100) according to any of the preceding claims, wherein the apparatus (100) further comprising means (102') for causing the device (10, 20) to: allocate (232) a part of the resources (RES-SENS) for the sensing (SENS) in resources configured for at least one of a) uplink data transmission, or b) downlink data transmission.

7. The apparatus (100) according to any of the preceding claims, wherein the apparatus (100) further comprising means (102') for causing the device (10, 20) to: use (240) a radar technique (RADAR-TECH) for the sensing (SENS).

8. The apparatus (100) according to any of the preceding claims, wherein the apparatus (100) further comprising means (102') for causing the device (10, 20) to: use (250) one radio unit (RU) for transmitting and receiving sensing signals.

9. The apparatus (100) according to any of the preceding claims, wherein the apparatus (100) further comprising means (102') for causing the device (10, 20) to: use (260) a first radio unit (RU1) for transmitting sensing signals, use (262) a second radio unit (RU2) for receiving the sensing signals.

10. A method for a device (10, 20) for a wireless communication system (1000; 1000'), comprising:
allocating (200) resources (RES-SENS) for sensing (SENS) based on a guard time (GT) between resources (RES-UL, RES-DL) for uplink and downlink transmissions, performing (202) sensing (SENS) using the resources (RES-SENS) allocated for the sensing (SENS).

11. A network device (10) for a wireless communication system (1000), comprising at least one apparatus (100; 100') according to any of the claims 1 to **9.**

12. A terminal device (20) for a wireless communication system (1000), comprising at least one apparatus (100; 100') according to any of the claims 1 to **9.**

13. A wireless communication system (1000; 1000') comprising at least one of: a) an apparatus (100; 100') according to any of the claims 1 to 10, or b) a network device (10) according to claim 11, or c) a terminal device (20) according to claim 12.

14. A computer program (PRG) comprising instructions (INSTR) which, when executed by an apparatus (100; 100'), cause the apparatus (100; 100') to perform at least one aspect of the method according to claim 10.

15. A computer-readable storage medium (SM), for example a non-transitory computer-readable storage medium, comprising the computer program (PRG) according to claim 14.
